# EUROPEAN PATENT APPLICATION

(11) **EP 4 339 680 A1**
(43) Date of publication of application: **20.03.2024**
(21) Application number: 22807529.7
(22) Date of filing: 12.05.2022
(51) Int. Cl.: G02B 21/28, G01N 21/01

(54) **MICROSCOPE AND OBSERVATION METHOD**

(30) Priority: 12.05.2021 JP 2021080906
(71) Applicant: OSAKA UNIVERSITY, Suita-shi Osaka 565-0871 (JP)
(72) Inventor: FUJITA Katsumasa, Suita-shi, Osaka 565-0871 (JP); KUMAMOTO Yasuaki, Suita-shi, Osaka 565-0871 (JP)
(74) Representative: Banse & Steglich Patentanwälte PartmbB
(86) International application number: PCT/JP2022/020045
(87) International publication number: WO 2022/239830

(57) **Abstract**

A microscope (1) according to the present embodiment includes: an objective lens (11) configured to receive light from a sample (200); and sample freezing means configured to freeze the sample (200) by supplying cryogen (160) to or bringing the cryogen (160) into contact with the sample (200) in the field of view of the objective lens (11). Use of the microscope (1) having such a configuration allows for freezing and observing a sample in the field of view of the objective lens (11).

## Description

### Technical Field

The present invention relates to a microscope and an observation method, and particularly relates to a technique for freezing and observing a sample.

### Background Art

In observing a biological sample with an optical microscope, the sample is sometimes fixed in advance to avoid changes in the sample during observation or by observation pretreatment. In this case, the fixation is performed through use of chemical fixation with aldehydes that crosslink proteins or dehydration fixation with organic solvents. These fixing methods are sufficient to maintain morphological information at the level of optical microscopic observation. However, some molecules may be oxidized by aldehydes or dissolved in organic solvents. Furthermore, the fixation reaction takes minutes, and the fixation reaction in a deep portion takes more time if the sample is thick. Additionally, there is also a problem in which not all molecules are fixed.

### Citation List

### Non Patent Literature

Non Patent Literature 1: Fuest, et al., J. Microsc. 272, 87 (2018).

### Summary of the Invention

In the background described above, cryofixation has recently begun to attract attention as a new method of fixing biological samples. Cryofixation is a method of physically stopping the movement of molecules and ions in a sample by freezing water. If freezing is carried out in a short time, biological samples can be fixed in their original state.

Non Patent Literature 1 discloses a method using a heat sink and a heater. In this method, a thin NiCr heater is placed on a heat sink cooled by liquid nitrogen. The sample placed on the heater is frozen at an optional timing by controlling the heater on and off. The sample is placed in the micro flow path to reduce the sample volume. This method has successfully frozen nematodes within several tens of msec. However, with this related art, the freezing speed is restricted by the thickness of the heater.

A microscope according to the present embodiment includes: an objective lens configured to receive light from a sample; and sample freezing means configured to freeze the sample by supplying cryogen to or bringing cryogen into contact with the sample in a field of view of the objective lens.

The microscope described above may be such that the sample can be observed while the cryogen is supplied.

The microscope described above may be such that an introduction mechanism is provided, the introduction mechanism introducing the cryogen toward the sample based on a signal from the sample or a signal for stimulating the sample.

The microscope described above may be such that the sample freezing means includes a supply pipe allowing the cryogen to flow, and a valve provided on the supply pipe of the cryogen serves as the introduction mechanism.

The microscope described above may further include pressurizing means configured to pressurize the sample, in which the sample is frozen while the sample is pressurized.

The microscope described above may be such that the sample is observed while the sample is pressurized with pressurizing means configured to pressurize the sample.

The microscope described above may be such that a control unit is provided, the control unit controlling a timing of pressurizing the sample and a timing of introducing the cryogen.

The microscope described above may be such that the cryogen in liquid form is supplied to the sample from above the sample.

The microscope described above may further include a sample holder configured to hold the sample, in which the sample holder is provided with a cryogen storage tub storing the cryogen or a flow path allowing the cryogen to flow.

The microscope described above may be such that the objective lens is arranged above the sample, the sample freezing means includes a nozzle configured to jet the cryogen from above toward the sample, and a cover protecting the objective lens is provided below the objective lens.

The microscope described above may have a function in which the frozen sample is irradiated with light and thereby at least a portion of the sample is melted.

An observation method according to the present embodiment includes: a step of arranging a sample in a field of view of an objective lens; a step of freezing the sample by supplying or moving cryogen to the sample in a field of view of the objective lens; and a step of observing the frozen sample.

The observation method described above may be such that the sample is observed while the cryogen is supplied.

The observation method described above may be such that the cryogen is introduced toward the sample based on a signal from the sample or a signal for stimulating the sample.

The observation method described above may be such that a supply pipe allowing the cryogen to flow is provided, and a timing of introducing the cryogen is adjusted by a valve provided in the supply pipe of the cryogen.

The observation method described above may be such that the frozen sample is irradiated with light so that at least a portion of the frozen sample is melted.

According to the present invention, it is possible to provide a microscope and an observation method, capable of freezing and observing a sample.

### Brief Description of Drawings

Fig. 1 is a perspective view showing a configuration of a sample holder.
Fig. 2 is a perspective view showing the configuration of the sample holder.
Fig. 3 is a diagram showing a configuration of an optical microscope according to a first embodiment.
Fig. 4 is a cross-sectional view schematically showing a configuration of a sample.
Fig. 5 is a schematic diagram showing an example of pressurizing means for pressurizing a sample.
Fig. 6 shows captured images of a sample before and after freezing.
Fig. 7 is a diagram showing a configuration of an inverted microscope according to a second embodiment.
Fig. 8 is a cross-sectional view showing a detailed configuration of a cryogen supply unit.
Fig. 9 is a perspective view showing a detailed configuration of the cryogen supply unit.
Fig. 10 is a diagram showing a configuration of an upright microscope according to a third embodiment.
Fig. 11 is a side view showing a detailed configuration of a cryogen supply unit.
Fig. 12 is captured images showing how a sample is frozen.
Fig. 13 is a perspective view showing a sample holder according to a first modified example.
Fig. 14 is a perspective view showing the sample holder according to the first modified example.
Fig. 15 is a perspective view showing a sample holder according to a second modified example.
Fig. 16 is a perspective view showing the sample holder according to the second modified example.
Fig. 17 is a schematic diagram showing a configuration of a microscope according to a fourth embodiment.
Fig. 18 is a waveform diagram showing a timing of cryogen injection in response to an electrocardiogram and electrical stimulation.
Fig. 19 is a schematic diagram showing a configuration of a microscope according to a fifth embodiment.
Fig. 20 is a schematic diagram showing a configuration of a microscope according to sixth embodiment.

### Description of Embodiments

Embodiments to which the present invention is applicable will be described below. The following description explains embodiments of the present invention, and the present invention is not limited to the following embodiments. For clarity of explanation, the following description has been omitted and simplified as appropriate. Moreover, those skilled in the art will be able to easily change, add, and convert each element of the following embodiments within the scope of the present invention. Note that the same reference numerals and characters in each figure indicate similar elements, and the description thereof will be omitted as appropriate.

### First Embodiment

An optical microscope (hereinafter also simply referred to as a microscope) according to the present embodiment freezes a sample with cryogen. The microscope has sample freezing means in which cryogen is supplied. The sample freezing means supplies cryogen to the sample in the field of view of the objective lens. Cryogen supplied from the sample freezing means freezes the sample. The sample in the field of view of the objective lens can be frozen. This allows the frozen sample to be easily observed.

A configuration of a sample holder 100 having the sample freezing means will be described. Note that, in the following figures, an XYZ three-dimensional orthogonal coordinate system is appropriately shown. The Z direction is a direction parallel to the optical axis. The XY plane is a plane orthogonal to the Z direction, and serves as a focal plane on which the sample is arranged.

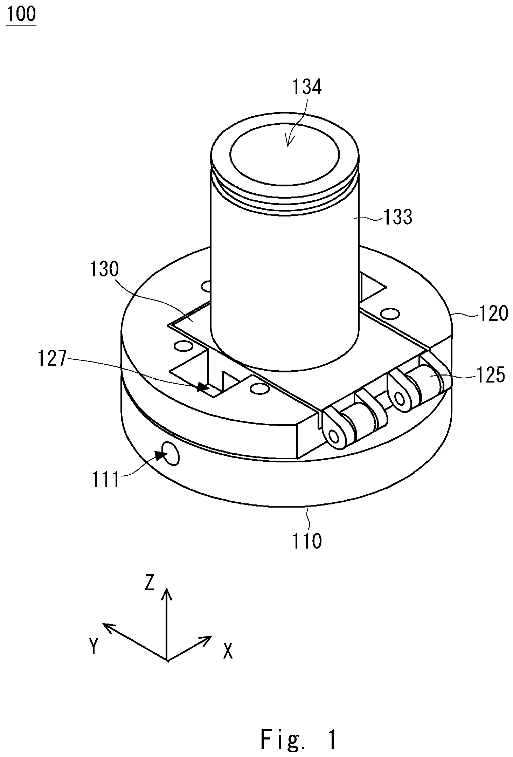

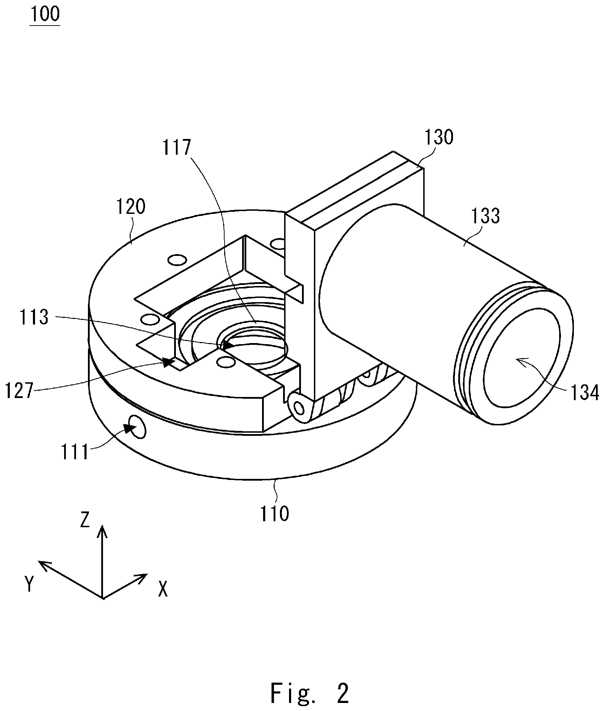

Figs. 1 and 2 are perspective views showing the configuration of the sample holder 100. The sample holder 100 includes a first plate 110, a second plate 120, and a cryogen supply unit 130. The cryogen supply unit 130 serves as the freezing means for freezing the sample by supplying cryogen toward the sample.

The sample holder 100 is used in an inverted microscope in which an objective lens is arranged directly below the sample. The cryogen to be used can be liquid or solid cryogen. Fig. 1 shows the cryogen supply unit 130 in a closed state, and Fig. 2 shows the cryogen supply unit 130 in an open state. The sample is observed in the state shown in Fig. 1, and is arranged on the sample holder 100 in the state shown in Fig. 2.

The first plate 110 and the second plate 120 are disk-shaped members. The first plate 110 and the second plate 120 are metal plates such as stainless steel. The first plate 110 and the second plate 120 are not limited to stainless steel, and can be formed of metal plates such as titanium. Alternatively, the first plate 110 and the second plate 120 can be formed of a polymer plate that has low thermal conductivity and is difficult to fracture even at low temperatures. The polymer plate can use materials such as Teflon (registered trademark), polycarbonate, and polylactic acid. Furthermore, the first plate 110 and the second plate 120 may be ceramic plates used as a heat insulating material.

The first plate 110 serves as a base installed on a stage of the microscope. The disk-shaped second plate 120 is fixed on the first plate 110. In the XY plane, the outer shapes of the first plate 110 and the second plate 120 are approximately the same size.

An opening portion 113 is provided in the central portion of the first plate 110 in the XY plane. The opening portion 113 penetrates in the Z direction. The opening portion 113 and its surroundings become a sample setting unit 117. A sample is placed in the sample setting unit 117. Therefore, the sample setting unit 117 serves as the focal plane of the objective lens.

A cryogen supply unit 130 is coupled to the second plate 120 with a hinge 125 interposed therebetween. The cryogen supply unit 130 serves as a cover that covers the opening portion 113. The cryogen supply unit 130 opens and closes by rotating around the axis of the hinge 125. When the cryogen supply unit 130 is closed, the cryogen supply unit 130 is arranged above the opening portion 113. When the cryogen supply unit 130 is opened, the upper side of the opening portion 113 is opened. Thereby, the sample in the sample setting unit 117 can be replaced.

A cylindrical cryogen storage unit 133 is provided in the upper portion of the cryogen supply unit 130. With the cryogen supply unit 130 closed, the cryogen storage unit 133 is located directly above the opening portion 113. A cryogen inlet 134 is provided on the upper side of the cryogen storage unit 133. The liquid cryogen is allowed to flow in from the cryogen inlet 134, and thereby the cryogen is stored in the cryogen storage unit 133. The cryogen comes into contact with the sample in the sample setting unit 117, so that the cryogen cools the sample. Thereby the sample is frozen. For example, in order to supply the cryogen, the user just needs to transfer the cryogen contained in the container to the cryogen storage unit 133.

A gas supply port 111 is arranged on the side surface of the first plate 110. The gas supply port 111 communicates with the opening portion 113. Gas to be jetted onto the objective lens for preventing dew condensation is supplied to the gas supply port 111.

Cryogen discharge ports 127 are provided on the upper surface of the second plate 120. The cryogen discharge ports 127 communicate with the opening portion 113. The cryogen discharge ports 127 are arranged on opposite sides of the cryogen supply unit 130 in the Y direction. The cryogen supplied from the cryogen supply unit 130 is discharged from the cryogen discharge ports 127. In other words, the cryogen used to cool the sample is discharged from the cryogen discharge ports 127. This allows for continuously supplying new cryogen, resulting in high cooling rate. Of course, the cryogen discharge ports 127 can be omitted.

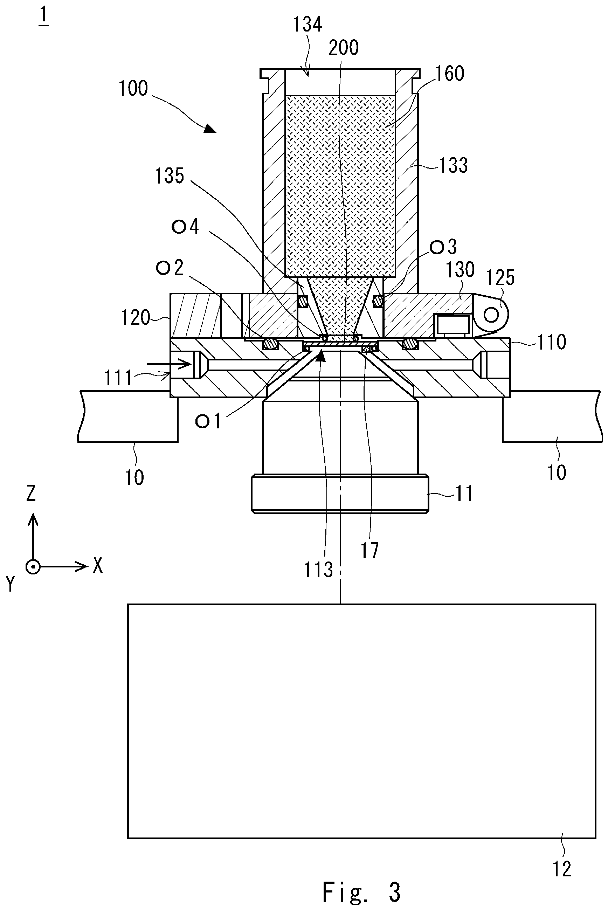

Fig. 3 is a side-cross-sectional view showing a state in which the sample holder 100 having the cryogen supply unit 130 is placed on the stage 10 of the microscope 1. Note that the sample holder 100 shown in Fig. 3 is not exactly the same as the sample holder 100 shown in Figs. 1 and 2. For example, in Figs. 1 and 2, the axis of the hinge 125 is parallel to the X direction, but in Fig. 3, the axis of the hinge 125 is parallel to the Y direction. Furthermore, O-rings O1 to 04 are arranged to prevent the liquid cryogen 160 from leaking. Preventing the cryogen 160 from leaking from the sample holder 100 can facilitate handling.

A sample holder 100 is fixed on the stage 10. An objective lens 11 that receives light from the sample 200 is arranged in the opening portion 113 of the sample holder 100. The objective lens 11 is inserted into the opening portion 113 from below. A sample 200 is placed directly above the objective lens 11. The sample 200 is arranged in the field of view of the objective lens 11. This allows for freezing the sample 200 while observing it. The space between the sample 200 and the first plate 110 is sealed with an O-ring O1. A microscope body portion 12 is arranged below the objective lens 11. The microscope body portion 12 includes an optical system such as a light source, a camera, a mirror, and an imaging lens. Light from the objective lens 11 is propagated through the microscope body portion 12. The camera captures an image of the sample 200 formed by an imaging lens. Alternatively, the microscope body portion 12 may include an eyepiece for direct observation by the user.

A cryogen supply unit 130 is arranged on the first plate 110. The space between the first plate 110 and the cryogen supply unit 130 is sealed with an O-ring O2. The cryogen supply unit 130 is provided with a cryogen storage unit 133, which stores the cryogen, in the upper portion of the unit 130. A cryogen storage unit 133 is arranged directly above the sample 200. The cryogen storage unit 133 communicates with the sample 200 located in the sample setting unit (not shown in Fig. 3). Cryogen 160 is stored in the cryogen storage unit 133 of the cryogen supply unit 130. The cryogen 160 is allowed to flow into the cryogen storage unit 133 from the cryogen inlet 134. The cryogen 160 comes into contact with the sample 200, and thereby freezes the sample 200.

A sample retainer 135 is provided within the cryogen storage unit 133. The sample retainer 135 presses the sample 200 from above, and thereby fixes the sample 200. The sample retainer 135 is detachably provided with respect to the cryogen supply unit 130. The sample retainer 135 can be replaced depending on the thickness, size, or the like of the sample 200. The space between the sample retainer 135 and the sample 200 is sealed with an O-ring O3. The space between the sample retainer 135 and the inner wall of the cryogen storage unit 133 is sealed with an O-ring O4.

A gas supply port 111 that reaches an opening portion 113 is provided in the side wall of the first plate 110. Dry nitrogen gas is supplied to the gas supply port 111. Nitrogen gas from the gas supply port 111 flows through the space between the objective lens 11 and the first plate 110. Nitrogen gas from the gas supply port 111 is blown toward the objective lens 11. Jetting nitrogen gas onto the objective lens 11 for preventing dew condensation can prevent dew condensation on the objective lens 11 and the sample 200. Furthermore, a thermocouple 17 for measuring temperature is provided on the wall surface of the first plate 110 on the side of the opening portion 113 or on the lower surface of the sample 200. Thereby, the cooling temperature by the cryogen 160 can be evaluated.

The gas supply port 111 may be utilized as a gas suction port that sucks gas around the objective lens 11. In other words, a vacuum pump or the like sucks gas through the gas supply port 111. This evacuates the space between the objective lens 11 and the first plate 110. The area around the objective lens 11 can be brought into a reduced-pressure state or a vacuum state. This allows for preventing dew condensation on the objective lens 11. Additionally, creating a reduced-pressure state or a vacuum state can reduce the heat transmitted from the objective lens 11 to the sample 200. Therefore, the heat insulation properties can be improved.

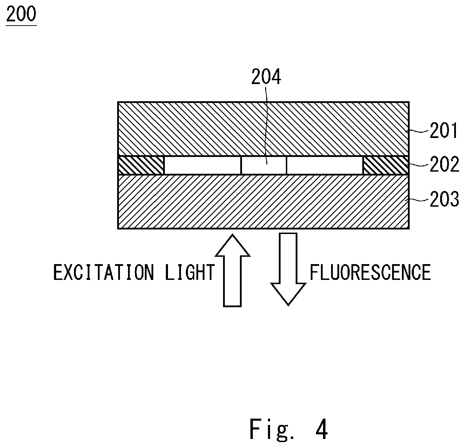

Fig. 4 is a detailed cross-sectional view showing an example of the sample 200 to be frozen. The sample 200 includes a substrate 201, a spacer 202, a cover glass 203, and an observation target 204.

The substrate 201 is, for example, a circular copper plate with a thickness of 0.2 mm and a diameter of 25 mm. Of course, the material of the substrate 201 is not limited to copper. For example, the material of the substrate 201 may be diamond, SiC (silicon carbide), SiN (silicon nitride), stainless steel, or the like. The cover glass 203 is a transparent glass substrate with a thickness of 0.17 mm. The spacer 202 has a thickness of 0.02 mm.

The substrate 201 and the cover glass 203 are arranged facing each other with a spacer 202 interposed therebetween. In other words, a gap corresponding to the thickness of the spacer 202 is formed between the substrate 201 and the cover glass 203. The observation target 204 is placed in the gap between the substrate 201 and the cover glass 203.

Excitation light enters the observation target 204 from the side of the cover glass 203. The fluorescence emitted to the side of the cover glass 203 enters the objective lens. Liquid cryogen is supplied from the side of the substrate 201. The liquid cryogen is a liquid propane/isopentane mixed solution of 2:1 or 3:1.

In this way, the cryogen supply unit 130 is provided that supplies cryogen to the sample 200. This allows for quickly freezing the observation target 204 in the field of view of the objective lens, and observing the frozen sample 200.

In this way, in the present embodiment, the cryogen is supplied directly to the sample 200. In other words, since the cryogen comes into contact with the substrate 201 of the sample 200, the sample 200 can be frozen in a short time. Biological samples can be fixed in their original state. If the sample is made of cells or pieces of biological tissue, the sample can be frozen on the order of milliseconds. Thus supplying liquid cryogen directly to internal organs in biological bodies allows for fixing the states in vivo in their original state.

Since the cryogen is directly supplied, even large samples 200 can be frozen in a short time. This reduces restrictions on the thickness and size of the sample 200. Therefore, various samples 200 can be frozen and observed. In particular, since only the thin substrate 201 is arranged between the observation target 204 and the cryogen, rapid cooling and freezing is possible. If the sample 200 is at room temperature before adding the cryogen, rapid freezing is possible.

Furthermore, the substrate 201 arranged between the objective lens 11 and the observation target 204 may be a transparent substrate. This allows for irradiating the observation target with illumination light and excitation light from the side of the substrate 201. When the substrate 201 is a transparent substrate, observation can be made from the side of the substrate 201.

The cryogen is not limited to liquid, but may be solid such as powder. For example, cooled metal can be used as cryogen. The metal is moved to be brought into contact with the sample 200, thereby allowing the sample 200 to be frozen. The cryogen supply unit 130 moves the cryogen located away from the sample 200 toward the sample 200, and thereby the sample 200 can be frozen. The sample freezing means for freezing the sample with cryogen is not limited to the above examples. The sample freezing means just needs to be means for supplying or moving cryogen toward the sample within the field of view of the objective lens 11 to freeze the sample. The cryogen just needs to be cooled to a temperature lower than the freezing temperature of the sample.

The sample freezing means is not limited to a configuration in which the cryogen is supplied so as to bring the cryogen into contact with the sample 200. In other words, the sample freezing means may be configured to supply the cryogen so that the cryogen does not come into contact with the sample 200. For example, the configuration may be such that cryogen cools the sample with a substrate, film, sheet, or the like interposed therebetween. In other words, the sample freezing means for supplying the cryogen to the sample brings the cryogen into contact with a substance other than the sample. The sample is cooled with the other substance interposed therebetween, to be frozen. In this way, the sample freezing means may supply the cryogen with another substance interposed between the sample 200 and the cryogen.

Furthermore, two or more types of cryogen may also be used. For example, it is possible to use a first cryogen that freezes the sample 200 and a second cryogen that maintains the frozen sample 200 in the frozen state. First, the first cryogen is supplied to the sample 200 at room temperature. After the sample 200 is frozen, the first cryogen is stopped being supplied and the second cryogen is then supplied. The second cryogen maintains the sample 200 in a frozen state. Therefore, the sample 200 in a frozen state can be observed. The first cryogen and the second cryogen may be supplied from the same cryogen supply unit, or may be supplied from different cryogen supply units. Additionally, cooling means other than cryogen may be used. For example, electronic cooling such as a Peltier element can be used in combination.

It is also possible to observe the sample 200 while supplying the cryogen. In other words, the cryogen may be continuously supplied from the cryogen supply unit 130 while the sample 200 is being observed. For example, providing the cryogen discharge ports 127 allows new cryogen to be continuously supplied. Thereby, it is possible to continue cooling the sample 200 so that the sample 200 does not melt.

Furthermore, the cryogen may be supplied to the sample 200 while pressure is applied to the sample. As a result, the sample is frozen while being pressurized. Pressurizing the sample allows for preventing formation of ice crystals. For example, pressurizing means applies a pressure of 210 MPa or less to the sample 200. Even if the sample 200 is thick, the sample 200 can be frozen without ice crystals.

A pressure jet can be used as the pressurizing means for pressurizing the sample. For example, nozzles for jetting gas are provided diagonally above and diagonally below the sample 200. Pressure is then applied to the sample by jetting high-pressure gas toward the sample from above and below. This allows for freezing the sample 200 while applying pressure to it.

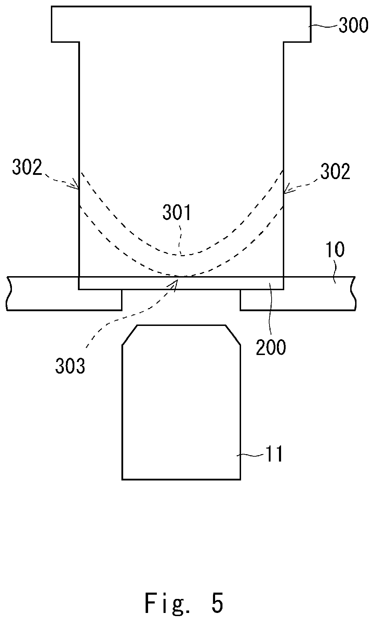

Alternatively, a pressurization mechanism such as a piston may be used as means for applying pressure. Fig. 5 is a diagram schematically showing a configuration using a piston 300 as the pressurizing means. In Fig. 5, the piston 300 is arranged above the sample 200, and the objective lens 11 is arranged below the sample 200. A cryogen supply unit 301 is provided inside the piston 300. Specifically, a through hole provided from the side surface to the bottom surface of the piston 300 serves as the cryogen supply unit 301. Thus, the mechanism for applying pressure and the mechanism for freezing are provided independently.

Two openings 302 are provided on the side surface of the piston 300, and an opening 303 is provided in the center of the bottom surface. A through hole penetrating from one opening 302 to the other opening 302 via an opening 303 serves as a cryogen supply unit 301. One opening 302 serves as a cryogen supply port, and the other opening 302 serves as a cryogen discharge port. The cryogen supplied from one opening 302 flows to the opening 303. As a result, the sample 200 facing the opening 303 is frozen by the cryogen. The cryogen used for freezing is then discharged from the other opening 303. This allows for freezing the sample 200 while applying pressure to it. Furthermore, the observation may be performed under pressurization.

Additionally, the timing of applying pressure may be synchronized with the timing of introducing cryogen or the timing of stimulating the sample 200. Control of the timing of introducing the cryogen, the timing of pressurization, and the timing of stimulating the sample 200 will be described later.

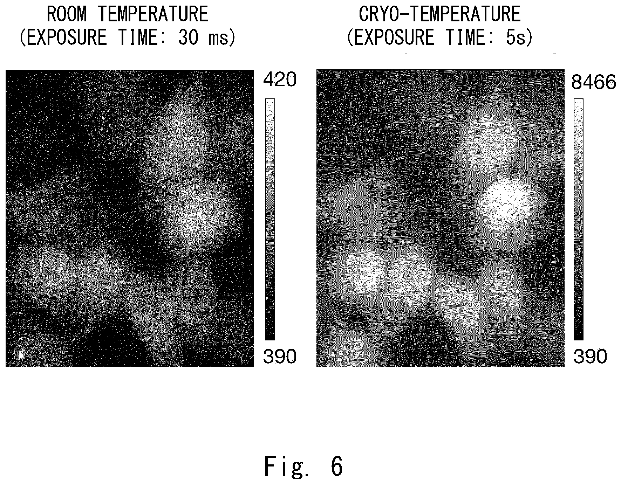

Fig. 6 is a diagram showing microscopic images of a sample at room temperature and a sample after freezing. The samples are HeLa cells labeled with Fluo-4. The objective lens has a magnification of 60 times and a numerical aperture of 0.95, and the excitation light source is a mercury lamp. In the sample, the intensity of the excitation light is 1.04 mW.

The sample at room temperature is imaged by setting an exposure time of a microscope camera to 30 msec. The sample after freezing is imaged by setting an exposure time of the microscope camera to five seconds. Thus supplying the cryogen toward the sample 200 allows the sample to freeze instantly. This allows the sample to freeze while preserving the shape of the cells. Since the exposure time of the camera can be increased, the sample can be imaged with a high signal-to-noise ratio.

By simply introducing cryogen at an optional timing, the sample 200 under microscope observation can be fixed in a state close to its original state. Furthermore, the microscope according to the present embodiment is applicable to any type of optical microscopes or any optical response for observations, and therefore is applicable to all optical microscopes. The microscope according to the present embodiment allows for capturing a snapshot of the dynamics of a biological sample, for which it is difficult to integrate signals over a long period of time. The microscope 1 described above is applicable to research in which biological samples are observed. Furthermore, the above-mentioned microscope 1 can also be applied clinically.

### Second Embodiment

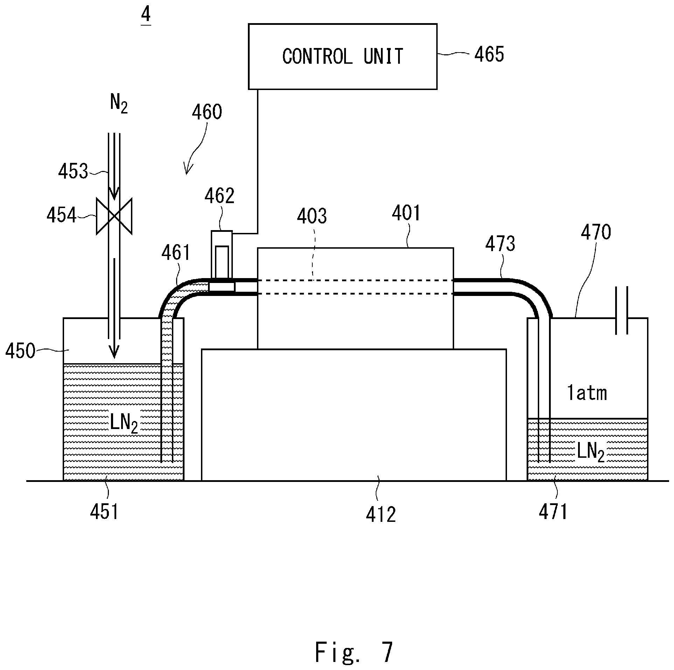

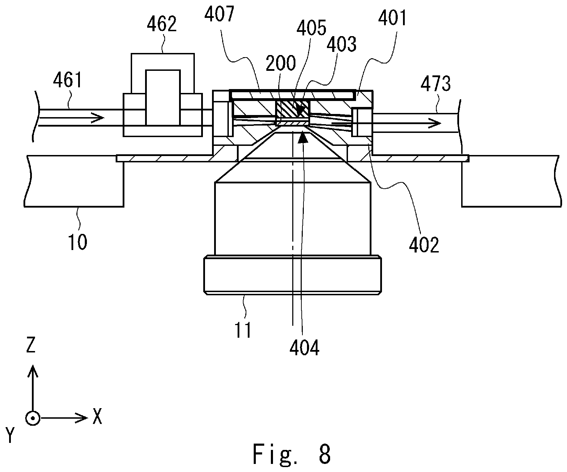

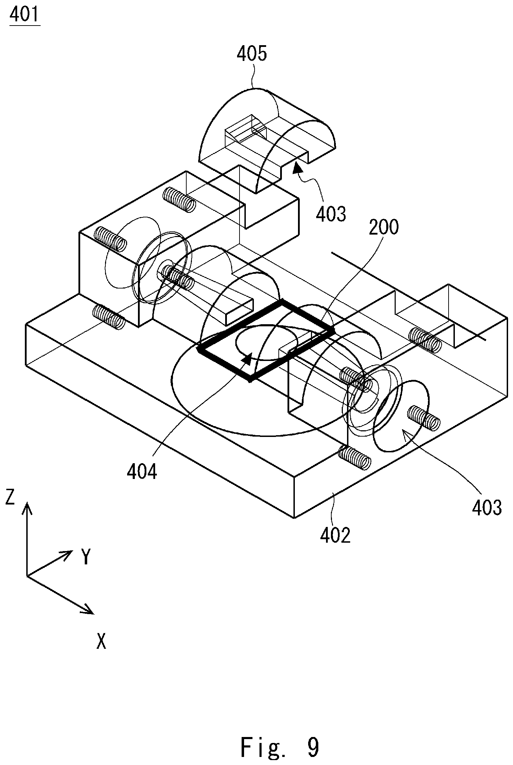

In a second embodiment, the cryogen supply unit includes a supply pipe and a valve. A microscope 4 according to the second embodiment will be described with Figs. 7 to 9. Fig. 7 is a schematic diagram of an overall configuration of the microscope 4. Fig. 8 is a cross-sectional view showing a configuration of a sample holder 401. Fig. 9 is a perspective view of the sample holder 401. Here, the microscope 4 is an inverted microscope. Furthermore, liquid nitrogen is used as cryogen.

As shown in Fig. 7, the sample holder 401 is arranged on the microscope body portion 412. A cryogen supply unit 460 includes a Dewar 450, a supply pipe 461, and a valve 462. The supply pipe 461 of the cryogen supply unit 460 is connected to the sample holder 401. One end of the supply pipe 461 is connected to the sample holder 401, and the other end is installed inside the Dewar 450. The Dewar 450 and sample holder 401 are connected with supply pipe 461 interposed therebetween. The valve 462 is provided in the middle of the supply pipe 461. Preferably, the supply pipe 461 is covered with a heat insulating material.

Cryogen 451 is stored in the Dewar 450. A pressurized gas supply pipe 453 is connected to the Dewar 450 with a valve 454 interposed therebetween. The pressurized gas supply pipe 453 supplies nitrogen gas into the Dewar 450. Due to the nitrogen gas from the pressurized gas supply pipe 453, the pressure inside the Dewar 450 is higher than one atmosphere. Furthermore, the inside of the sample holder 401 is at one atmosphere. Cryogen is filled from the other end of the supply pipe 461 to the valve 462. At the timing when the valve 462 is opened, the cryogen 451 in the supply pipe 461 is discharged into the sample holder 401. The cryogen 451 passes through the supply pipe 461 and reaches a sample.

A discharge pipe 473 for discharging the cryogen is connected to the sample holder 401. The discharge pipe 473 and the supply pipe 461 are connected with a flow path 403 interposed therebetween. The cryogen supplied to the sample holder 401 from the supply pipe 461 is discharged from the discharge pipe 473. One end of the discharge pipe 473 is connected to the sample holder 401, and the other end is installed in a cryogen recovery tub 470. The inside of the cryogen recovery tub 470 has a pressure of one atmosphere. The cryogen used to cool the sample is stored in a cryogen recovery tub 470. This allows the used cryogen 471 to be recovered. Preferably, the discharge pipe 473 is covered with a heat insulating material.

It is preferable to cool the supply pipe 461, valve 462, and discharge pipe 473 in advance. For example, the cryogen is allowed to pass through the sample holder 401 in advance before the sample is placed on the sample holder 401. This allows for cooling the sample holder 401, supply pipe 461, valve 462, discharge pipe 473, and the like. The sample holder 401 and the like are heated, and then a sample is placed in the sample holder 401. Thereafter, the valve 462 is opened to allow the cryogen to flow from the supply pipe 461, and then the sample 200 is frozen.

As shown in Figs. 8 and 9, the sample holder 401 includes a base 402 and a sample retainer 405. Additionally, the sample holder 401 includes a cover 407 as shown in Fig. 9. Note that the cover 407 is omitted in Fig. 8. A flow path 403 through which cryogen flows is formed in the base 402 or the sample retainer 405. Furthermore, a cover 407 covers the sample retainer 405. Additionally, the base 402 has an opening portion 404 formed therein. The opening portion 404 is a through hole that penetrates the base 402 in the Z direction. As shown in Fig. 8, the objective lens 11 is placed in the opening portion 404.

As shown in Fig. 8, a flow path 403 is provided in the sample holder 401. The flow path 403 is provided in the X direction. The supply pipe 461 and the discharge pipe 473 are connected with a flow path 403 interposed therebetween. The sample 200 is arranged directly below the flow path 403. Cryogen flows directly above the sample 200. The cryogen flowing through the flow path 403 comes into contact with the sample 200. Thereby, the sample 200 can be cooled.

The sample retainer 405 is detachably attached to the base 402. With the sample retainer 405 removed from the base 402, the sample 200 is arranged in the opening portion 404 of the base 402. The sample 200 is arranged so as to cover opening portion 404. The sample retainer 405 is attached to the base 402 from above the sample 200, and thereby the sample 200 can be fixed to the sample holder 401.

Thus providing the valve 462 in the supply pipe 461 of the cryogen supply unit 460 allows the sample 200 to be frozen at an appropriate timing. The measurement result will be described that has been obtained by measuring the temporal shift in temperature with a thermocouple installed in the flow path 403. Immediately after valve 462 opens, the temperature reaches -189.5°C. Therefore, the sample 200 can be frozen by bringing the cryogen into contact with the sample 200 immediately after opening the valve 462. This allows for freezing in a short time.

The valve 462 may be opened and closed by the user operating a switch or the like. Alternatively, a control unit 465 may be provided that controls opening and closing of the valve 462. The control unit 465 can control the timings of opening and closing the valve 462. The valve 462 opens and closes based on control signals output from control unit 465.

Various signals can be used to trigger opening and closing of the valve 462. For example, the control unit 465 may control the valve based on signals from the sample 200. Specifically, the control unit 465 outputs control signals based on the optical signals and electrical signals from the sample 200. The optical signals from the sample 200 to be used can be the intensities of scattered light or the intensities of fluorescence. Additionally, the control unit 465 may image the sample 200 to use signals corresponding to its shape, size, etc. for control signals. For example, if the sample 200 is a pulsating internal organ, the control unit 465 outputs control signals in response to changes in the shape of the sample 200. This allows for freezing in conjunction with the pulsation timings.

Based on the captured image of the sample 200, the control unit 465 controls the timings of opening and closing the valve 462. Furthermore, in performing fluorescence observation, the sample can be frozen in conjunction with the timing at which the amount of fluorescence light fluctuates. When the sample 200 is a heart, the control unit 465 may control the valve 462 based on the electrical signals of the electrocardiogram. In this way, the control unit 465 may control the timing of freezing based on the signals from the sample 200. Thereby, the sample 200 can be frozen at a desired timing.

Alternatively, if optical stimulation, electrical stimulation, electromagnetic stimulation, magnetic stimulation, or the like is applied to the sample 200 based on signals for stimulating the sample 200, the control unit 465 opens and closes valve 462 in response to the signals that stimulates the sample 200. This allows the sample 200 to be frozen in conjunction with the timing of stimulation. Furthermore, the stimulation of the sample 200 is not limited to optical stimulation, electrical stimulation, electromagnetic stimulation, and magnetic stimulation. Stimulation of the sample 200 can be provided by drugs, temperature, mechanical stimulation, electromagnetic waves, electron beams, radiation, optogenetics, photodissociation of caged compounds, or the like. Use of signals for stimulating the sample 200 allows the sample to be frozen at an appropriate timing.

The control unit 465 controls opening and closing of the valve 462 in this manner, thereby allowing for adjusting the timing of introducing the cryogen. Of course, the control unit 465 may control the timing of introducing the cryogen using two or more signals. Furthermore, the introduction mechanism for introducing the cryogen into the cryogen supply unit or the flow path 403 is not limited to the valve 462. For example, in the configuration shown in Figs. 1 to 3, a mechanism or the like may be used that drives a container of the cryogen so as to pour the cryogen into the cryogen inlet 134. A container storing cryogen is arranged above the cryogen inlet 134. The container may be tilted in response to the control signal. Tilting the container allows the cryogen to be introduced into the cryogen inlet 134. Alternatively, the valve 454 may be controlled for pressurizing the Dewar 450 to introduce the cryogen into the flow path 403. For example, the valve 462 is opened at the timing to introduce the cryogen. As a result, the space inside the Dewar 450 is pressurized, and the cryogen 451 flows through the flow path 403. Furthermore, a system may be employed in which the path of the cryogen flowing through the flow path close to the sample is switched to supply the cryogen to the sample. For example, two flow paths are prepared, one in contact with the sample and one in non-contact therewith, and an electromagnetic valve for switching the flow path is arranged close to the sample. First, cryogen is allowed to flow through the non-contact flow path, and then control of an electromagnetic valve with external signals switches the path to introduce the cryogen of the sample. This allows for introducing lower temperature cryogen into the sample with less time lag.

Furthermore, the timing of introducing the cryogen may be synchronized with the timing of pressurization of the first embodiment. For example, the control unit 465 controls so as to synchronize the timing of opening and closing the valve and the timing of pressurization. Similarly, the timing of stimulating the sample may be synchronized with the timing of pressurization of the first embodiment. The control unit 465 controls the timing of pressurization based on the signals from the sample 200. Alternatively, the control unit 465 controls the timing of pressurization based on signals that stimulates the sample 200.

### Third Embodiment

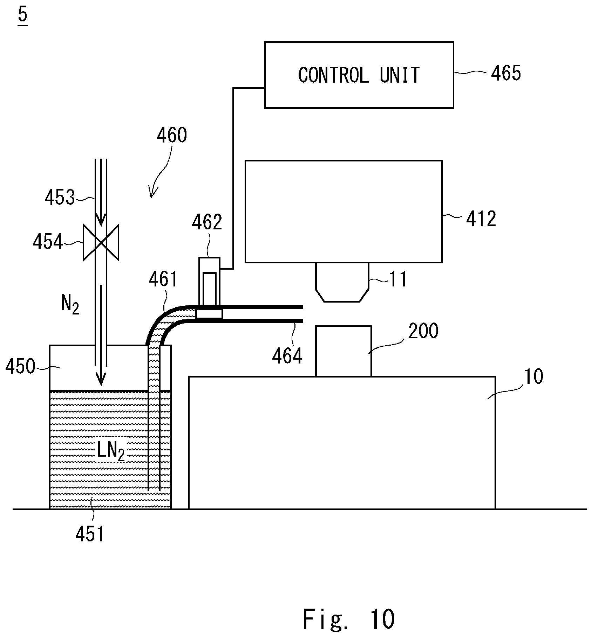

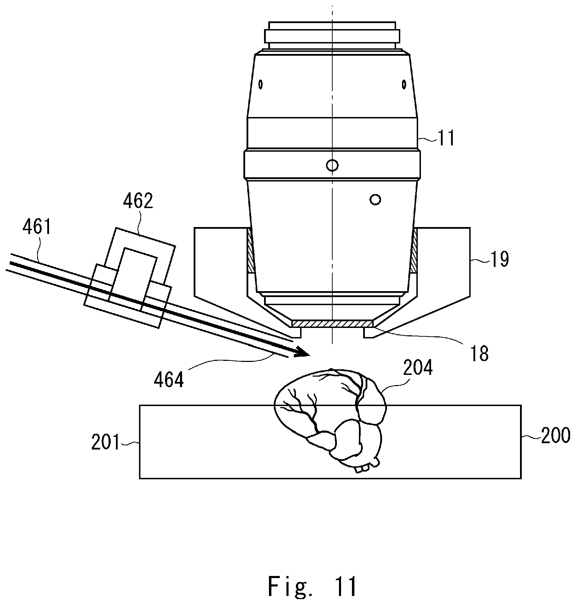

A microscope according to a third embodiment will be described with Figs. 10 and 11. Fig. 10 is a schematic diagram showing an overall configuration of a microscope 4. Fig. 11 is an enlarged view of the surroundings of the objective lens 11 and the sample 200. In the third embodiment, the microscope 5 is an upright microscope. Furthermore, similarly to the second embodiment, the freezing timing is controlled by opening and closing the valve 462.

A sample 200 is arranged directly below the objective lens 11. The sample 200 is placed on the stage 10. The sample 200 is placed in the field of view of the objective lens 11. The sample 200 includes a substrate 201 and an observation target 204 arranged on the substrate 201. A microscope body portion 412 is arranged above the objective lens 11. The microscope body portion 412 has an optical system such as a light source, a camera, an imaging lens, and a mirror. Light from the objective lens 11 is propagated through the microscope body portion 412. The camera captures an image of the sample 200 formed by an imaging lens. Alternatively, the microscope body portion 412 may include an eyepiece for direct observation by the user.

A cryogen supply unit 460 includes a Dewar 450, a supply pipe 461, and a valve 462. One end of the supply pipe 461 is arranged in the vicinity of the sample 200, and the other end is placed inside the Dewar 450. The valve 462 is provided in the middle of the supply pipe 461. It is preferable that the valve 462 be arranged in the vicinity of the objective lens 11.

Similarly to the second embodiment, cryogen 451 is stored in the Dewar 450. A pressurized gas supply pipe 453 is connected to the Dewar 450 with a valve 454 interposed therebetween. The pressurized gas supply pipe 453 supplies nitrogen gas into the Dewar 450. Due to the nitrogen gas from the pressurized gas supply pipe 453, the pressure inside the Dewar 450 is higher than one atmosphere. Cryogen is filled from the other end of the supply pipe 461 to the valve 462. At the timing when the valve 462 is opened, the cryogen 451 in the supply pipe 461 is discharged into the sample holder 401. The cryogen 451 passes through the supply pipe 461 and reaches a sample.

As shown in Fig. 11, an end of the supply pipe 461 serves as a nozzle 464 that jets cryogen. The inner diameter of the nozzle 464 is 3 mm in diameter. The objective lens 11 is a long working distance objective lens. The end of the nozzle 464 is arranged between the objective lens 11 and the sample 200. Nozzle 464 jets cryogen toward sample 200. The end of the nozzle 464 may be arranged directly above the sample 200.

The valve 462 is arranged on the side of the objective lens 11. Before observation, the sample 200 and objective lens 11 are warmed. The valve 462 is preferably arranged in the vicinity of sample 200. When the valve 462 opens, cryogen is jetted from the nozzle 464 in the direction of an arrow. Cryogen is jetted onto the observation target 204 from diagonally above. The cryogen jetted onto the sample 200 freezes the observation target 204 of the sample 200. Therefore, the sample 200 can be frozen in a short time.

Further, a protector 19 is provided around the end of the objective lens 11 to protect the lens. Additionally, the protector 19 holds a transparent protective glass 18. The protective glass 18 is interposed between the objective lens 11 and the sample 200. This allows for preventing the cryogen from being jetted onto the objective lens 11.

Furthermore, dry gas may be allowed to flow into the space between the protector 19 and the objective lens 11. The space between the protector 19 and the objective lens 11 may be evacuated to create a vacuum state or a reduced-pressure state. This allows for preventing dew condensation and cooling of the objective lens 11. Likewise, dry gas may be allowed to flow into the space between the protective glass 18 and the objective lens 11. Furthermore, the space between the protector 19 and the objective lens 11 may be evacuated. In this way, the lens function can be maintained without causing dew condensation on the surface of the objective lens 11.

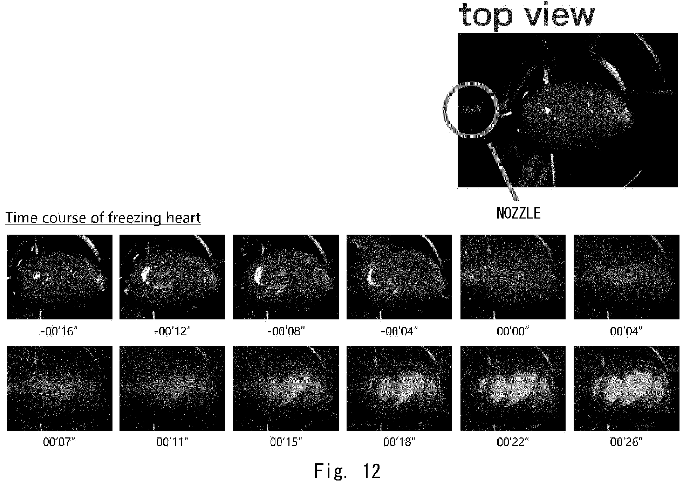

Fig. 12 is a microscopic photographs obtained by observing how the sample is frozen. Fig. 12 is a microscopic images, captured from above, of a rat perfused heart with a stereomicroscope. The end of the nozzle is arranged on the left side of the sample. The timing at which the cryogen is jetted from the nozzle is defined as 00'00". Microscopic photographs are shown that are captured at intervals of 0.03 sec or 0.04 sec. In this way, the sample is frozen immediately after the cryogen is jetted from the nozzle. Therefore, the diastole and the systole of the heart can be observed separately.

### First Modified Example

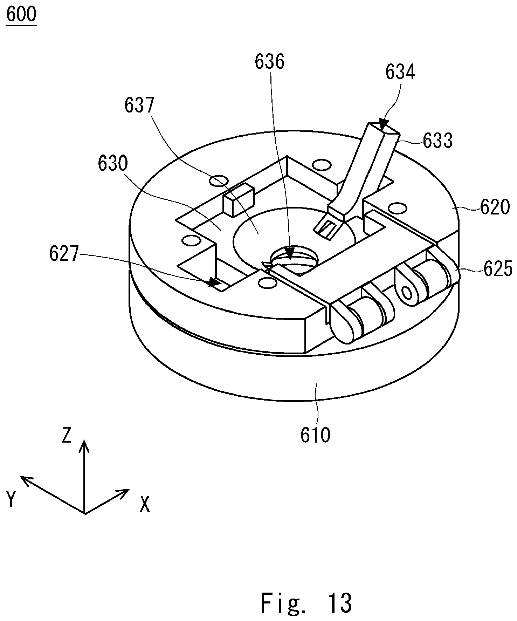

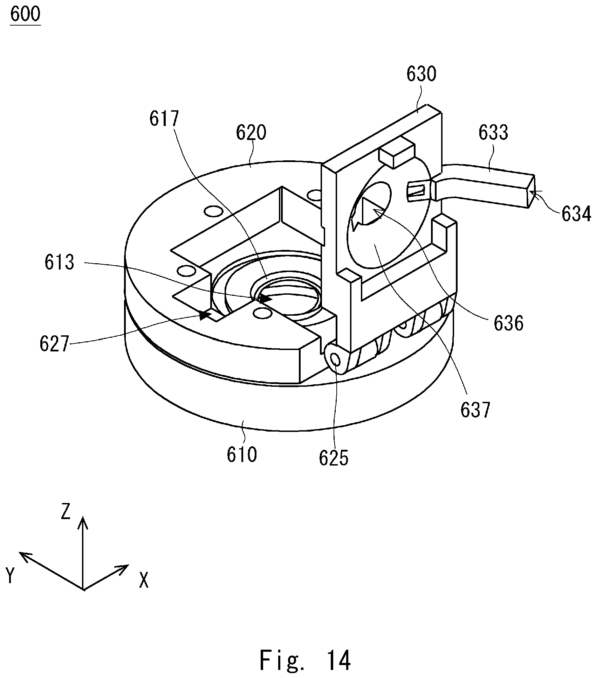

A modified example of a sample holder serving as sample freezing means will be described with reference to Figs. 13 and 14. Figs 13 and 14 are perspective views showing a sample holder 600 according to the first modified example. The sample holder 600 is used in an upright microscope. Therefore, the objective lens is arranged above the sample holder 600.

The sample holder 600 includes a first plate 610, a second plate 620, and a cryogen storage unit 630. The cryogen storage unit 630 is coupled to the second plate 620 with a hinge 625 interposed therebetween. In Figs. 13 and 14, the angles of the cryogen storage unit 630 around the hinge 625 are different. The sample is observed in the state shown in Fig. 13. The sample can be taken out from the sample holder 600 in the state shown in Fig. 14.

The first plate 610 and the second plate 620 are disk-shaped members. The first plate 610 and the second plate 620 are formed of, for example, a metal plate such as stainless steel. The metal plate can be formed not only of stainless steel but also of a metal plate such as titanium. Alternatively, the first plate 610 and the second plate 620 can be formed of a polymer plate that has low thermal conductivity and is difficult to fracture even at low temperatures. Materials such as Teflon, polycarbonate, and polylactic acid can be used for the polymer plate. Further, the first plate 610 and the second plate 620 may be ceramic plates to be used as a heat insulating material.

The first plate 610 serves as a base installed on the stage of the microscope. A disk-shaped second plate 620 is fixed on the first plate 610. In the XY plane, the outer shapes of the first plate 610 and the second plate 620 are approximately the same size.

As shown in Fig. 14, an opening portion 613 is provided in the central portion of the first plate 610 in the XY plane. The opening portion 613 penetrates in the Z direction. The opening portion 613 and its surroundings serve as a sample setting unit 617. A sample is placed in the sample setting unit 617. Therefore, the sample setting unit 617 serves as the focal plane of the objective lens.

The cryogen storage unit 630 serves as a cover that holds the sample. For example, the sample 200 is placed between the cryogen storage unit 630 and the first plate 610. The cryogen storage unit 630 rotates around the axis of the hinge 625. When the cryogen storage unit 630 is rotated toward the first plate 610, the sample 200 is sandwiched between the cryogen storage unit 630 and the first plate 610. As a result, the sample holder 600 holds the sample, making the sample observable. Furthermore, when the cryogen storage unit 630 is rotated away from the first plate 610, the upper side of the sample setting unit 617 is opened. Thereby, the sample can be placed in the sample setting unit 617. Also, the sample in the sample setting unit 617 can be taken out.

The cryogen storage unit 630 is provided with a lens arrangement unit 636 in which an objective lens is arranged. The lens arrangement unit 636 includes an opening that penetrates in the Z direction. The lens arrangement unit 636 is arranged directly above the opening portion 613. Here, the lens arrangement unit 636 is formed with a tapered slope 637 in accordance with the shape of the obj ective lens.

A supply pipe 633 functioning as a cryogen supply unit is diagonally provided in the cryogen storage unit 630. With the sample 200 sandwiched between the cryogen storage unit 630 and the first plate 610, the supply pipe 633 is located diagonally above the lens arrangement unit 636. Note that the form of the sample 200 is not limited to the configuration shown in Fig. 4. For example, the sample 200 may be an internal organ itself. A cryogen inlet 634 is provided in the upper part of the supply pipe 633. A tube or the like through which the cryogen flows may be connected to the cryogen inlet 634. When the liquid cryogen is allowed to flow in from the cryogen inlet 634, the cryogen flows from the supply pipe 633 to the slope 637. The cryogen comes into contact with the sample in the sample setting unit 617, to cool the sample. Thereby the sample is frozen. For example, in order to supply cryogen, the user may transfer cryogen contained in a container to the supply pipe. Alternatively, the supply timing of the cryogen may be controlled by opening and closing a valve as in the second embodiment. This configuration allows for freezing a sample in the field of view of the objective lens with a simple configuration and method.

Cryogen discharge ports 627 are provided on the upper surface of the second plate 620. The cryogen discharge ports 627 communicate with the opening portion 613. The cryogen discharge ports 627 are arranged on opposite sides of the cryogen storage unit 630 in the Y direction. The cryogen supplied from the supply pipe 633 is discharged from the cryogen discharge ports 627. In other words, the cryogen used to cool the sample is discharged from the cryogen discharge ports 627. This allows for continuously supplying new cryogen, resulting in high cooling rate. Of course, the cryogen discharge ports 627 can be omitted.

### Second Modified Example

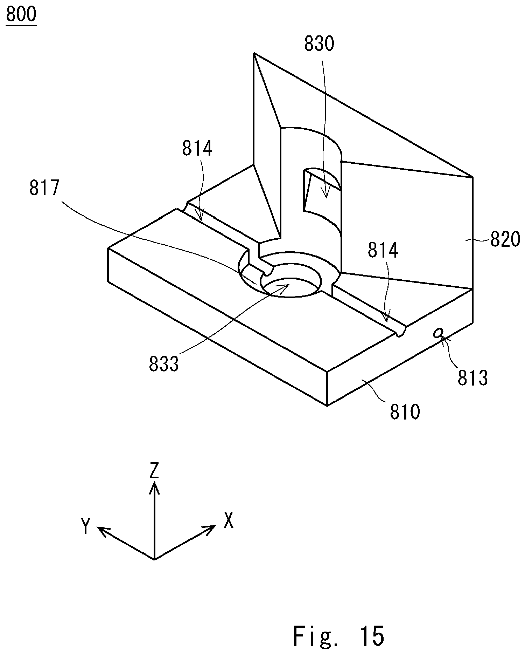

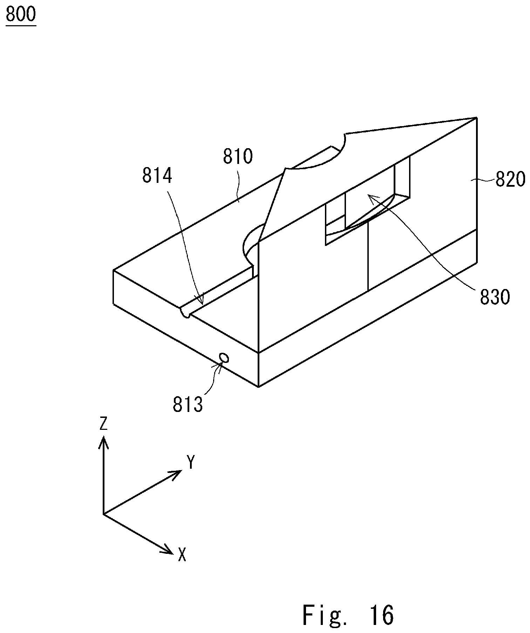

A second modified example of a sample holder serving as sample freezing means will be described with reference to Figs. 15 and 16. Figs. 15 and 16 are perspective views showing a configuration of a sample holder 800. The sample holder 800 according to the second modified example can be used in a stereomicroscope. More specifically, the sample holder 800 is applicable to a stereomicroscope for perfused heart, the observation target of which is hearts. The sample holder 800 is applicable to an upright microscope. Furthermore, the sample holder 800 may be applied to an inverted microscope.

The sample holder 800 includes a base 810 and a side wall 820. The base 810 is a flat plate-shaped member in the XY plane. The base 810 is formed with a transparent member, allowing illumination or observation from below. A cryogen storage tub 833 is provided in the central portion of the base 810 as viewed from the XY plane. The cryogen storage tub 833 is a circular recessed portion. A step provided around the cryogen storage tub 833 serves as a sample setting unit 817. A sample (not shown) is placed on the sample setting unit 817. An objective lens (not shown) is arranged above or below the sample setting unit 817. Thus, the sample is arranged in the field of view of the objective lens.

A discharge port 813 is provided on the side surface of the base 810 on the -Y side. The discharge port 813 is connected to the sample setting unit 817 and the cryogen storage tub 833. Perfusate is discharged from the discharge port 813. Alternatively, the cryogen may be discharged from the discharge port 813. The discharge port 813 is provided in the Y direction. The discharge port 813 penetrates inside the base 810 until it connects to the sample setting unit 817 or the cryogen storage tub 833. Grooves 814 is formed on the upper surface of the base 810 for arranging electrodes and perfusion cardiac tubes. The grooves 814 are provided in the Y direction. The grooves 814 are connected to the cryogen storage tub 833. The grooves 814 extend from opposite sides of the cryogen storage tub 833.

The side wall 820 is provided at the +X side end portion of the base 810. The side wall 820 is erected from the upper surface of the base 810 on the +Z side. The side wall 820 is formed with a cryogen supply port 830. The cryogen supply port 830 penetrates the side wall 820 obliquely. Specifically, the cryogen supply port 830 lowers as progress from the +X side toward the -X side. Therefore, when the cryogen is introduced into the cryogen supply port 830 from the +X side, the cryogen flows down from the -X side of the cryogen supply port 830 toward the cryogen storage tub 833. Thus, the cryogen can come into contact with the sample to freeze the sample. This configuration allows for freezing a sample in the field of view of the objective lens with a simple configuration and method.

The present embodiment is applicable not only to inverted microscopes, upright microscopes, and stereomicroscopes, but also to other types of microscopes. For example, the present embodiment is also applicable to a microscope providing side illumination in which illumination light enters the sample from the side of the objective lens. The microscope is suitable for observing biological samples such as cultured cells and cardiomyocytes.

The light to be observed with a microscope may be any responses of scattering, absorption, emission, and reflection. The microscope is also applicable to fluorescence observation and Raman scattering observation. The sample being observed under a microscope can be frozen with cryogen, and the frozen sample can be continuously observed at low temperatures.

While fluorescence observation is performed on the calcium ions of the isolated, perfused heart of a rat arranged in the sample holder 600 with an upright microscope or a stereomicroscope, a mixed cryogen of liquid propane and isopentane is introduced from the inflow path to the storage unit at an optional timing, so that the ions are frozen and fixed. Freezing and fixing the heart in both diastole and systole allows for increasing the signal integration time that has been restricted by the speed of the phenomenon, allowing both diastole and systole to be observed.

Observing the frozen sample 200 allows various applications. For example, measurement of fluorescence lifetime allows for estimate of quantum yield. Furthermore, membrane potential imaging may be used for measurement of the cell membrane potential. Cell membrane potential and surrounding ion distribution can be measured simultaneously.

The sample 200 can be observed in association with the redox potential and redox state of the sample 200. When the sample 200 is a biological sample, the sample 200 can be observed in association with the measurement results of blood flow and oxygen concentration.

The sample 200 may be frozen and then melted by irradiating the sample 200 with light. For example, the sample 200 can be irradiated with infrared laser light to be melted. The sample 200 may be irradiated with the laser light with the objective lens 11 interposed therebetween, or the sample 200 may be irradiated from the side opposite to the objective lens 11. Additionally, adjustment of the irradiation region of the sample 200 allows for partially melting the sample 200 as well. For example, the laser light may be applied only to the portion of the sample 200 that is desired to be thawed.

Furthermore, after the sample 200 is melted by laser irradiation, the sample 200 can be frozen again by stopping the laser light irradiation. Therefore, the sample 200 can be observed while the sample is repeatedly frozen and thawed. Thus, thawing the sample by laser light irradiation allows the thawed portion to be observed. Alternatively, the sample, which has once been thawed, can be refrozen for observation in a frozen state.

Furthermore, the sample to be observed with a microscope is not limited to a sample placed on a sample substrate. For example, a sample flowing through a flow path such as a micro flow path may be observed. In other words, the sample is included in the fluid flowing in the flow path. The cryogen is introduced into the flow path in the field of view of the objective lens. For example, cryogen is brought into contact with the substrate provided with the flow path (channel). Thereby, the sample in the flow path can be frozen instantly.

### Fourth Embodiment

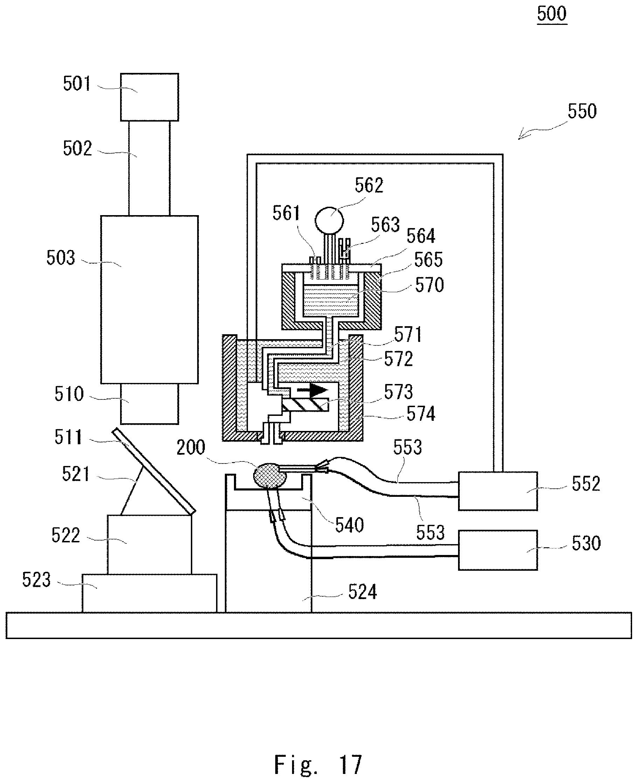

In a fourth embodiment, cryogen is supplied based on signals from the sample or signals for stimulating the sample. A configuration will be described with Fig. 17 that is for supplying cryogen based on signals from the sample or signals for stimulating the sample. Fig. 17 is a diagram showing a configuration of a microscope according to the fourth embodiment.

A microscope 500 includes a camera 501, an imaging lens 502, a housing 503, an objective lens 510, a mirror 511, a column 521, a raising stand 522, a stage 523, a jack 524, and sample freezing means 550. Additionally, the microscope 500 includes a stimulating electrode 553 for stimulating the sample 200, a function generator 552, an electrocardiogram measuring apparatus 530, and the like.

The sample 200 is held in a sample chamber 540. Sample 200 is an isolated heart. The sample chamber 540 is fixed on a height-adjustable jack 524. The sample freezing means 550 is arranged directly above the sample 200. The sample 200 is illuminated with room illumination light.

The mirror 511 is arranged on the side of the sample 200. The mirror 511 is supported by the column 521, the raising stand 522, and a stage 523. The objective lens 510, the housing 503, the imaging lens 502, and the camera 501 are provided above the mirror 511. Light that enters the mirror 511 from the sample 200 is reflected by the mirror 511 and enters the objective lens 510. The light that enters the objective lens 510 is refracted by the objective lens 510 and enters the housing 503.

The light from the objective lens 510 enters the imaging lens 502 via the housing 503. The imaging lens 502 forms an image of the sample 200 on the light receiving surface of the camera 501. This allows the camera 501 to image the sample 200. Well-known optical systems can be used for the optical system for guiding the light from the light source to the sample 200 and the optical system for guiding the light from the sample 200 to the camera 501, so description thereof will be omitted.

The sample freezing means 550 includes the function generator 552. The sample freezing means 550 includes a pressurized gas inlet 561, a pressure gauge 562, a safety valve 563, a sealing cover 564, a heat insulating container 565, a cryogen flow path 571, an electromagnetic valve 573, and a pre-cooling box 574.

Liquid cryogen 570 is stored in the heat insulating container 565. The upper side of the heat insulating container 565 is sealed with a sealing cover 564. Furthermore, pressurized gas is supplied to the heat insulating container 565 from the pressurized gas inlet 561. The pressure gauge 562 measures the gas pressure of the pressurized gas. When the pressure detected by the pressure gauge 562 becomes a predetermined pressure or greater, the safety valve 563 releases the pressurized gas.

The cryogen flow path 571 is connected to the lower side of the heat insulating container 565. The pressurized gas causes the cryogen to flow downward through the cryogen flow path 571. The cryogen flow path 571 passes through the pre-cooling box 574. The pre-cooling box 574 is pre-cooled with liquid nitrogen 572. The electromagnetic valve 573 is provided in the middle of the cryogen flow path 571. The bottom surface of the pre-cooling box 574 has a cryogen supply port. The cryogen is supplied from directly above the sample 200. The electromagnetic valve 573 is opened to supply cryogen to the sample 200, and thereby the sample 200 is frozen.

The function generator 552 generates control signals for controlling the electromagnetic valve. The electromagnetic valve 573 opens and closes by control signals from the function generator 552. Function generator 552 outputs trigger signals to the stimulating electrode 553. The trigger signals are signals that electrically stimulates the isolated heart, which is the sample 200. The sample 200 is stimulated by the trigger signals applied to the stimulating electrode 553. The function generator 552 independently controls the control signals and the trigger signals. Function generator 552 can control the intensity and phase of the applied voltage.

The electromagnetic valve 573 opens with a predetermined time lag from the timing at which the electrical stimulation is applied to the sample 200. When the electromagnetic valve opens by control signals from the function generator 552, the cryogen is supplied to the sample 200. In this way, the timing of applying the cryogen can be controlled in response to the trigger signals for stimulating the sample 200. Additionally, the function generator 552 can cause the timing of the control signals to be variable, allowing for adjusting the timing of applying the cryogen. This allows for freezing the sample 200 after a desired time elapses from the electrical stimulation. The sample 200 can be frozen in response to the operation timings of the heartbeat.

Additionally, an electrocardiogram measuring apparatus 530 is connected to the sample 200. The electrocardiogram measuring apparatus 530 measures an electrocardiogram according to the heartbeat of the sample 200.

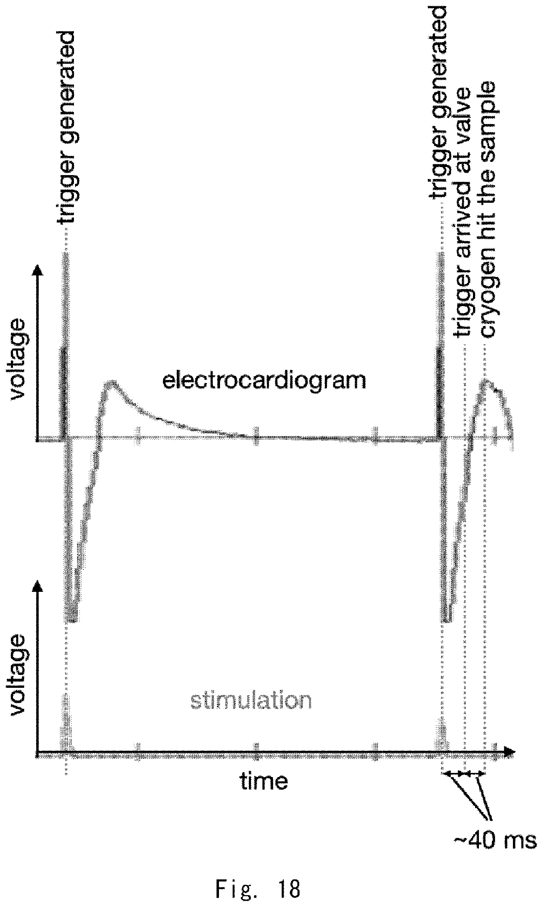

Fig. 18 is a diagram showing an electrocardiogram and a waveform of a trigger signal. The upper part of Fig. 18 shows the waveform of the electrocardiogram, and the lower part shows the waveform of the trigger signal (stimulation) given to the stimulating electrode 553. Here, the control signal reaches the electromagnetic valve 573 approximately in 40 msec after the trigger signal is generated. Further about 40 msec after, the cryogen comes into contact with the sample 200.

Note that in the above description, the timing of supplying the cryogen is controlled based on the trigger signals from the function generator 552, but the timing of supplying the cryogen can be controlled based on the electrocardiogram measured by the electrocardiogram measuring apparatus 530. In other words, the timing of opening the electromagnetic valve 573 can be adjusted in response to the electrocardiogram waveform. Since the timing of the diastole or systole of the heart can be measured from the electrocardiogram waveform, the sample 200 can be frozen at a desired timing. Therefore, the timing of supplying the cryogen can be controlled in response to the signals from the sample 200.

### Fifth Embodiment

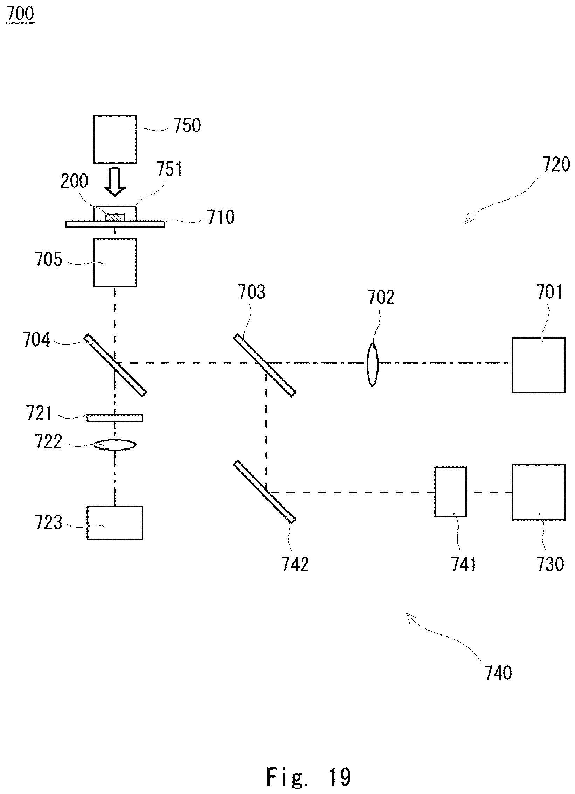

In the fifth embodiment, the sample 200 is frozen with cryogen and then the sample 200 is irradiated with laser light, so that the sample 200 is thawed. A microscope according to the fifth embodiment will be described with Fig. 19. Fig. 19 is a diagram schematically showing an optical system of a microscope 700. Here, the microscope 700 will be described as a fluorescence microscope that detects fluorescence from the sample 200.

The microscope 700 includes an observation light source 701, a stage 710, an observation optical system 720, a two-dimensional photodetector 723, a thawing light source 730, a thawing optical system 740, a cryogen injection apparatus 750, and a container 751. The observation optical system 720 includes a lens 702, a dichroic mirror 703, a dichroic mirror 704, an objective lens 705, a filter 721, and a tube lens 722. The thawing optical system 740 includes a shutter 741, a scanner 742, a dichroic mirror 703, a dichroic mirror 704, and an objective lens 705.

The stage 710 holds a container 751 that accommodates the sample 200. Therefore, the sample 200 is placed on the stage 710. The cryogen injection apparatus 750 is provided above the sample 200. The cryogen injection apparatus 750 is the sample freezing means described above, and supplies the sample 200 with cryogen. The sample 200 is frozen by the cryogen introduced from the cryogen injection apparatus 750.

The following describes the observation optical system 720 for guiding light from the observation light source 701. The observation light source 701 is, for example, a laser light source, and generates excitation light for exciting the sample 200. Laser light (excitation light) from the observation light source 701 is concentrated by the lens 702 and enters the dichroic mirror 703. The dichroic mirror 703 has wavelength characteristics of transmitting light with the excitation light wavelengths and reflecting light for thawing.

The laser light transmitted through the dichroic mirror 703 enters the dichroic mirror 704. The dichroic mirror 704 has wavelength characteristics of reflecting light with the excitation light wavelengths and transmitting fluorescence. The excitation light reflected by the dichroic mirror 704 enters the objective lens 705. The objective lens 705 concentrates the excitation light onto the sample 200.

The sample 200 is placed on a substrate (not shown) that transmits the wavelengths of excitation light and thawing light. The sample 200 and the substrate are placed on the stage 710. The stage 710 includes an opening below the sample 200 portion. Therefore, the excitation light passes through the opening of the stage 710 and enters the sample 200.

When the excitation light excites the sample 200, fluorescence is generated from the sample 200. Fluorescence from the sample 200 is refracted by the objective lens 705 and enters the dichroic mirror 704. The fluorescence transmitted by the dichroic mirror 704 enters the filter 721.

The filter 721 has wavelength characteristics that block excitation light from the observation light source 701 and light from the thawing light source 730. The filter 721 transmits the fluorescence generated by the sample 200. The fluorescence transmitted through the filter 721 enters the tube lens 722. The tube lens 722 concentrates the fluorescence onto the two-dimensional photodetector 723. The two-dimensional photodetector 723 can capture a fluorescence image of the sample 200.

The thawing light source 730 generates, for example, infrared light for heating. Although the thawing light source 730 will be described as a laser light source that generates laser light, the thawing light source 730 may be a lamp light source or the like. Laser light from the thawing light source 730 enters the scanner 742 via the shutter 741. The scanner 742 is an optical scanner such as a galvanometer mirror. The scanner 742 is a two-axis scanner, and two-dimensionally scans the irradiation position of the laser light on the sample 200. Thereby, the laser light can be applied to any position on the sample 200.

The light reflected by the scanner 742 enters the dichroic mirror 703. The dichroic mirror 703 has wavelength characteristics that reflect infrared light. Therefore, the dichroic mirror 703 reflects the laser light from the scanner 742. Thereby, the laser light from the thawing light source 730 is propagated coaxially with the excitation light from the observation light source 701. The laser light reflected by the dichroic mirror 703 enters the dichroic mirror 704.

The dichroic mirror 704 has wavelength characteristics that reflect infrared light toward the objective lens 705. Therefore, the laser light reflected by the dichroic mirror 704 enters the objective lens 705. The objective lens 705 refracts the laser light so as to concentrate it onto the sample 200. Irradiating the sample 200 with laser light partially heats the sample 200, which has been frozen with cryogen. Thereby, at least a portion of the sample 200 can be melted.

Additionally, the laser light from the thawing light source 730 is coaxial with the excitation light from the observation light source 701. Therefore, the laser light and the excitation light enter the sample 200 at the same position. This allows for capturing a fluorescence image of the sample 200 at the position heated by the laser light. This then allows for observing the behavior of the frozen sample 200 while it is thawed. Furthermore, the scanner 742 that scans the laser light is provided, allowing for controlling the irradiation position of the laser light. This allows the sample 200 to be appropriately thawed. Additionally, it is also possible to control the position and time of thawing during observation.

Furthermore, a shutter 741 is arranged in the optical path of the laser light from the thawing light source. The shutter 741 is provided in the openable and closable manner. When the shutter 741 opens, the laser light enters the sample 200 to heat the sample 200. When the shutter 741 closes, laser light is not applied to the sample 200. Controlling the opening and closing of the shutter 741 allows the sample 200 to be melted at an appropriate timing.

### Sixth Embodiment

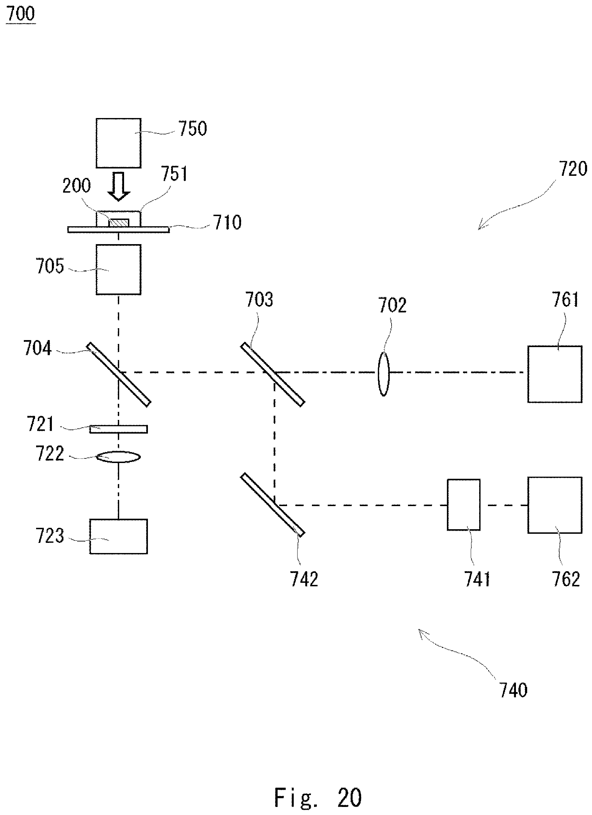

A microscope 700 according to a sixth embodiment will be described with Fig. 20. Fig. 20 is a diagram showing a configuration of the microscope 700. In the sixth embodiment, the sample 200 includes a caged compound and a calcium indicator. The microscope 700 is used to freeze and observe the sample 200 containing a caged compound and a calcium indicator. Therefore, light sources 761 and 762 are different from those in the fifth embodiment. The configurations other than the light sources, for example, the configuration of the optical system, are the same as in the fifth embodiment, so description thereof will be omitted.

In the sixth embodiment, the light source 761 is a light source for observing a calcium indicator. The light source 761 generates excitation light that excites the calcium indicator contained in the sample 200. When the sample 200 is irradiated with excitation light from the light source 761, fluorescence is generated from the calcium indicator. The two-dimensional photodetector 723 detects fluorescence, and thereby the calcium concentration can be measured.

The light source 762 is a light source that generates light with which the caged compound is irradiated. The light source 762 generates ultraviolet light or visible light. The sample 200 has a photodegradable protecting group. The protecting group causes bioactive molecules to be temporarily inactive. The light from light source 762 dissociates the protecting group. This causes the bioactive molecules to be active.

By controlling the timing at which the shutter 741 opens and closes, the timing at which the molecules are activated can be controlled. Additionally, by controlling the opening and closing of a valve provided in the middle of the cryogen flow path, the timing of freezing can be controlled.

As described above, the invention made by the present inventor has been specifically explained based on the embodiments, but it goes without saying that the present invention is not limited to the embodiments described above, and can be modified in various ways without departing from the gist thereof.

This application claims priority based on Japanese Patent Application No. 2021-080906 filed on May 12, 2021, and the entire disclosure thereof is incorporated herein.

### Reference Signs List

- 1: MICROSCOPE
- 4: MICROSCOPE
- 5: MICROSCOPE
- 10: STAGE
- 11: OBJECTIVE LENS
- 100: SAMPLE HOLDER
- 110: FIRST PLATE
- 111: GAS SUPPLY PORT
- 113: OPENING PORTION
- 117: SAMPLE SETTING UNIT
- 120: SECOND PLATE
- 125: HINGE
- 127: CRYOGEN DISCHARGE PORT
- 130: CRYOGEN SUPPLY UNIT
- 133: CRYOGEN STORAGE UNIT
- 134: CRYOGEN INLET
- 160: CRYOGEN
- 401: SAMPLE HOLDER
- 402: BASE
- 403: FLOW PATH
- 404: OPENING PORTION
- 405: SAMPLE RETAINER
- 450: DEWAR
- 451: CRYOGEN
- 460: CRYOGEN SUPPLY UNIT
- 461: SUPPLY PIPE
- 462: VALVE
- 464: NOZZLE
- 465: CONTROL UNIT
- 470: CRYOGEN RECOVERY TUB
- 471: CRYOGEN
- 473: DISCHARGE PIPE
- 600: SAMPLE HOLDER
- 610: FIRST PLATE
- 613: OPENING PORTION
- 617: SAMPLE SETTING UNIT
- 620: SECOND PLATE
- 625: HINGE
- 627: CRYOGEN DISCHARGE PORT
- 630: CRYOGEN STORAGE UNIT
- 633: SUPPLY PIPE
- 634: CRYOGEN INLET
- 636: LENS ARRANGEMENT UNIT
- 637: SLOPE
- 800: SAMPLE HOLDER
- 810: BASE
- 813: DISCHARGE PORT
- 820: SIDE WALL
- 830: CRYOGEN SUPPLY PORT
- 833: CRYOGEN STORAGE TUB

## Claims

1. A microscope comprising:
an objective lens configured to receive light from a sample; and
sample freezing means configured to freeze the sample by supplying cryogen to or bringing cryogen into contact with the sample in a field of view of the objective lens.

2. The microscope according to claim 1, wherein the sample can be observed while the cryogen is supplied.

3. The microscope according to claim 1, wherein an introduction mechanism is provided, the introduction mechanism introducing the cryogen toward the sample based on a signal from the sample or a signal for stimulating the sample.

4. The microscope according to claim 3, wherein
the sample freezing means includes a supply pipe allowing the cryogen to flow, and
a valve provided on the supply pipe of the cryogen serves as the introduction mechanism.

5. The microscope according to claim 1, further comprising pressurizing means configured to pressurize the sample,
wherein the sample is frozen while the sample is pressurized.

6. The microscope according to claim 1, wherein the sample is observed while the sample is pressurized with pressurizing means configured to pressurize the sample.

7. The microscope according to claim 6, wherein a control unit is provided, the control unit controlling a timing of pressurizing the sample and a timing of introducing the cryogen.

8. The microscope according to claim 1, wherein the cryogen in liquid form is supplied to the sample from above the sample.

9. The microscope according to claim 1, further comprising a sample holder configured to hold the sample,
wherein the sample holder is provided with a cryogen storage tub storing the cryogen or is provided with a flow path allowing the cryogen to flow.

10. The microscope according to claim 1, wherein
the objective lens is arranged above the sample,
the sample freezing means includes a nozzle configured to jet the cryogen from above toward the sample, and
a cover protecting the objective lens is provided below the objective lens.

11. The microscope according to any one of claims 1 to 10, the microscope having a function in which the sample is irradiated with light and thereby at least a portion of the frozen sample is melted.

12. An observation method comprising:
a step of arranging a sample in a field of view of an objective lens;
a step of freezing the sample by supplying or moving cryogen to the sample in a field of view of the objective lens; and
a step of observing the frozen sample.

13. The observation method according to claim 12, wherein the sample is observed while the cryogen is supplied.

14. The observation method according to claim 12, wherein the cryogen is introduced toward the sample based on a signal from the sample or a signal for stimulating the sample.

15. The observation method according to claim 14, wherein
a supply pipe allowing the cryogen to flow is provided, and
a timing of introducing the cryogen is adjusted by a valve provided in the supply pipe of the cryogen.
